# EUROPÄISCHE PATENTSCHRIFT

(11) **EP 0 845 626 B1**
(45) Veröffentlichungstag und Bekanntmachung des Hinweises auf die Patenterteilung: **09.01.2002**
(21) Anmeldenummer: 97810861.1
(22) Anmeldetag: 12.11.1997
(51) Int. Cl.: F16L 3/04, H02G 3/30, F16L 3/237

(54) **Kabelhaltebügel**
Cable grip
Elément de fixation pour câbles

(30) Priorität: 28.11.1996 DE 19649251
(43) Veröffentlichungstag der Anmeldung: 03.06.1998
(73) Patentinhaber: HILTI Aktiengesellschaft, 9494 Schaan (LI)
(72) Erfinder: Herb, Armin, 86974 Apfeldorf (DE); Thalmayr, Bernd, 86161 Augsburg (DE)
(74) Vertreter: Wildi, Roland

(56) Entgegenhaltungen:
- DE-A- 2 937 495
- DE-A- 3 228 475
- GB-A- 856 832
- GB-A- 1 075 301

## Beschreibung

Die Erfindung betrifft einen Kabelhaltebügel gemäss dem Oberbegriff des Patentanspruchs 1 (siehe z.B. DE-A-3 228 475).

Zur Verlegung von Kabeln an Wänden, Decken, Böden u. dgl. werden vielfach Kabelhaltebügel eingesetzt, die es erlauben, ein oder mehrere parallel zueinander verlaufende Kabel gemeinsam am Untergrund zu haltern. Ein bekannter derartiger Kabelhaltebügel umfasst einen über seine Längserstreckung konvex gewölbten, flexiblen Flachstab, der von einem mit einer Bohrung versehenen Stützfuss abragt. Zur Befestigung des Kabelhaltebügels am Untergrund wird ein Befestigungsmittel, beispielsweise ein Nagel oder eine Schraube, durch die Bohrung im Stützfuss gesteckt und im Untergrund verankert. Der Flachstab weist herabgezogene Seitenflächen auf, deren Unterseite an den Kabeln anliegt. Die Unterseite ist mit einer Zahnung versehen, die mit dem Mantel eines unter dem Kabelhaltebügel angeordneten Kabels verrastet. Am dem Stützfuss gegenüberliegenden freien Ende des Flachstabs sind an den Unterseiten der beiden herabgezogenen Seitenflächen nasenartige Vorsprünge vorgesehen, die bei am Untergrund befestigtem Kabelhaltebügel mit Vorspannung gegen den Untergrund gepresst sind. In einer alternativen Ausführungsvariante sind auch Kabelhaltebügel bekannt, bei denen zwei konvex gewölbte Flachstäbe zu beiden Seiten eines mittig angeordneten Stützfüsses abragen. Derartige doppelt ausgebildete Kabelhaltebügel werden eingesetzt um eine grosse Anzahl von parallel verlaufenden Kabeln zu haltern. Ihre Aufnahmekapazität für Kabel ist wegen der zu beiden Seiten des Stützfusses vorgesehenen konvex gewölbten Flachstäbe verdoppelt.

Zum Einführen oder zum Wiederentnehmen eines Kabels ist das freie Ende des konvex gewölbten Flachstabs gegen die Vorspannkraft elastisch anhebbar. Das Anheben kann durch seitliches Einschieben des Kabels oder aber von Hand erfolgen. Zur Erleichterung des Anhebens des freien Endes des Flachstabs beim seitlichen Einschieben eines Kabels bilden die nasenartigen Vorsprünge Einführschrägen, die bei Auflage mit dem Untergrund einen spitzen Winkel von etwa 30° einschliessen. In etwa geradliniger Verlängerung der Einführschrägen ragt vom freien Ende des konvex gewölbten Flachstabs eine Grifflasche ab. Die Grifflasche dient dem besseren Halten des freien Endes bei händischem Hochheben. Die in Gebrauchstellung zum Untergrund weisende Unterseite der Grifflasche bildet eine Einführfläche für das Kabel. Damit das freie Ende besser von Hand erfasst werden kann, sind an der Unterseite der Grifflasche leistenartige Profilierungen angeordnet, die sich über die Breite der Grifflasche erstrecken. Während die leistenartigen Profilierungen die Griffigkeit der Grifflasche erhöhen und das händische Anheben des freien Endes erleichtern, behindern sie jedoch das seitliche Einführen eines Kabels. Ein seitlich herangeschobenes Kabel stösst mit seiner Längserstreckung gegen die leistenartigen Profilierungen und presst das freie Ende gegen den Untergrund, anstatt es automatisch hochzudrücken.

Aufgabe der vorliegenden Erfindung ist es daher, einen Kabelhaltebügel derart zu modifizieren, dass im montierten Zustand sein freies Ende bequem von Hand bedienbar ist. Dabei soll zugleich auch ein ungehindertes, automatisches Hochheben durch seitliches Einschieben der Kabel ermöglicht sein. Der Kabelhaltebügel soll einfach und kostengünstig herstellbar sein. Die Lösung dieser Aufgaben besteht in einem Kabelhaltebügel mit den im kennzeichnenden Abschnitt des Patentanspruchs 1 angeführten Merkmalen. Vorteilhafte Weiterbildungen des erfindungsgemässen Kabelhaltebügels sind Gegenstand der abhängigen Patentansprüche. Der erfindungsgemässe Kabelhaltebügel zur Halterung von einem oder mehreren parallel zueinander an einem Untergrund verlaufenden Kabeln umfasst einen über seine Längserstreckung konvex gewölbten, flexiblen Flachstab, der von einem mit einer Bohrung versehenen Stützfuss abragt und herabgezogene Seitenflächen aufweist. Die in der Gebrauchsstellung des Kabelhaltebügels zum Untergrund weisenden Unterseiten der herabgezogenen Seitenflächen besitzen am dem Stützfuss gegenüberliegenden Endes des Flachstabs nasenartige Vorsprünge, die im montierten Zustand mit Vorspannung gegen den Untergrund gepresst sind. Die vom Stützfuss abgekehrten Stirnflächen der nasenartigen Vorsprünge schliessen mit dem Untergrund einen spitzen Winkel ein und fluchten mit der Unterseite einer Grifflasche, die vom Ende des Flachstabes abragt. Die Grifflasche weist an ihren beiden Längsseiten herabgezogene Flachseiten auf, die mit den Seitenflächen des Flachstabs fluchten. Die Flachseiten besitzen dem Untergrund zugewandte Gleitflächen, die in die Stirnflächen der nasenartigen Vorsprünge übergehen. An der Unterseite des freien Endes der Grifflasche ist eine quer zur Längserstreckung verlaufende Griffkante vorgesehen, welche die Gleitflächen verbindet.

Durch die erfindungsgemässe Ausbildung ist an der Unterseite der Grifflasche eine versenkte Griffmulde gebildet, die das Greifen und das Handhaben der Grifflasche erleichtert. Die dem Untergrund zugewandten Gleitflächen an der Grifflasche gehen in die Stirnflächen des nasenartigen Vorsprungs über. Dadurch sind an den beiden Längsseiten des Kabelhaltebügels Einführschrägen gebildet, die einem seitlich eingeschobenen Kabel einen hindernisfreien Zugang bieten. Der Flachstab wird beim Einschieben des Kabels einfach hochgedrückt und federt nach dem Passieren der nasenartigen Vorsprünge wieder zurück zum Untergrund. Die gewählte Form des Kabelhaltebügels ist einfach und weist keine konstruktiven Merkmale auf, die beispielsweise bei einem massentechnischen Kunststoffspritzgussverfahren zu Problemen bei der Entformung führen könnten. Dadurch können auch die Herstellkosten niedrig gehalten werden.

Indem die Griffkante, dem Verlauf des freien Endes der Grifflasche folgend, konvex gekrümmt ausgebildet ist, besitzt die Griffmulde eine dem angreifenden Finger angepasste Form. Dies erhöht die Griffigkeit der Grifflasche noch weiter.

Die Griffkante überragt die an den herabgezogenen Flachseiten gebildeten Gleitflächen mit Vorteil. Dadurch bietet die Grifflasche auch nassen oder öligen Fingern noch ausreichend Widerstand, damit der Kabelhaltebügel angehoben werden kann. Vorzugsweise beträgt der Überstand der Griffkante gegenüber den Gleitflächen etwa 0,5 mm bis etwa 1,5 mm. Bei diesen Überständen stellt die vorstehende Griffkante einem seitlich eingeschobenen Kabel kein Hindernis dar.

Zur Schonung der Ummantelung der eingeschobenen Kabel weisen die Stirnflächen der nasenartigen Vorsprünge und die Gleitflächen abgerundete Aussenkanten auf.

Es ist von Vorteil, wenn an der Unterseite des konvex gewölbten Flachstabs Versteifungsrippen angeordnet sind, die über die Längserstreckung des Flachstabs verteilt sind und die herabgezogenen Seitenflächen verbinden. Die Versteifungsrippen verhindern, dass bei Flachstäben mit relativ dünner Wandstärke beim Hochbiegen des freien Endes die herabgezogenen Seitenflächen seitlich ausknicken. Dadurch können relativ dünne Flachstäbe verwendet werden, was die Materialkosten herabsetzt.

Die erfindungsgemässe Ausbildung des Kabelhaltebügels ist nicht auf nur einseitig an einen Stützfuss angeformte Flachstäbe beschränkt. Auch doppelte Kabelhaltebügel, bei denen sich zu beiden Seiten des Stützfusses zwei konvex gewölbte Flachstäbe erstrecken und deren Längserstreckungen fluchten, weisen mit Vorteil die Merkmale gemäss der Erfindung auf. Dabei sind die Flachbügel bezüglich der Achse der Bohrung symmetrisch ausgebildet.

Im folgenden wird die Erfindung mit Bezug auf die schematischen Darstellungen näher erläutert. Es zeigen:
- Fig.1: eine teilweise geschnittene Seitenansicht eines Ausführungsbeispiels eines erfindungsgemässen Kabelhaltebügels;
- Fig. 2: eine Ansicht der Unterseite des Kabelhaltebügels aus Fig. 1; und
- Fig. 3: ein Längsschnitt des freien Endes des Kabelhaltebügels.

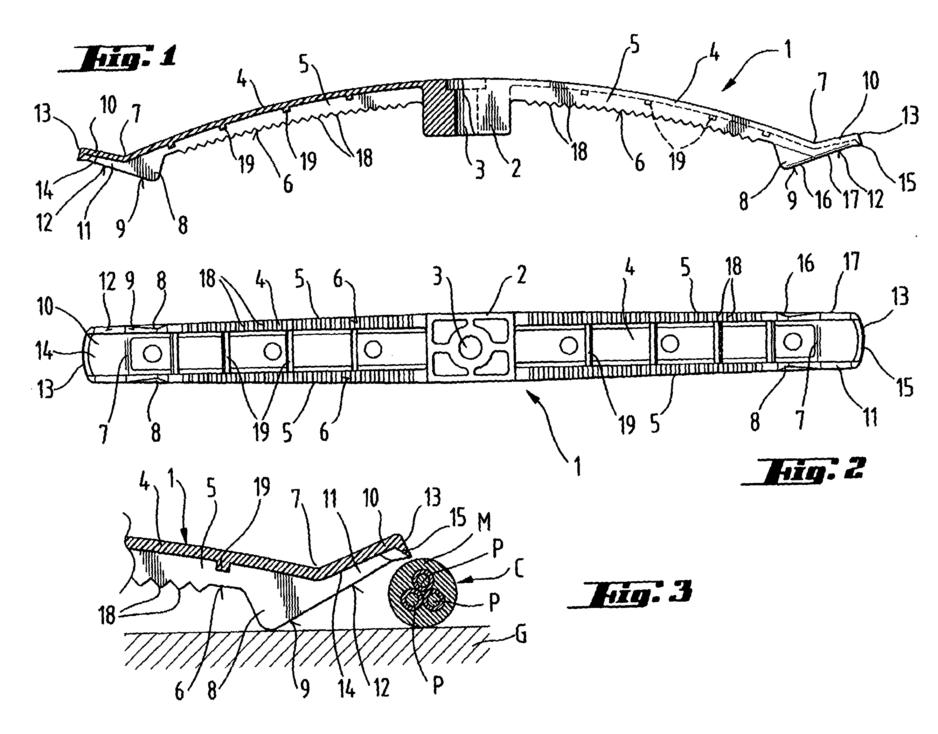

Bei dem in Fig. 1 und 2 gesamthaft dargestellten Ausführungsbeispiel des erfindungsgemässen Kabelhaltebügels handelt es sich jeweils um einen doppelten Kabelhaltebügel 1, bei dem sich zu beiden Seiten eines mit einer Bohrung 3 versehenen Stützfusses 2 je ein flexibler, konvex gewölbter Flachstab 4 erstreckt. Die beiden Flachstäbe 4 sind identisch ausgebildet, weshalb beide mit demselben Bezugszeichen versehen sind. Die erfindungsgemässe Ausbildung umfasst aber auch einfache Kabelhaltebügel mit nur einem von einem Stützfuss abragenden Flachstab. Die folgende Beschreibung des Ausführungsbeispiels erwähnt daher nur einen Flachstab 4. Es versteht sich jedoch und ist aus der Anordnung der Bezugszeichen in den Fig. 1 und 2 auch so ersichtlich, das im Fall eines doppelten Kabelhaltebügels 1 immer beide Seiten gemeint sind. An den Längsseiten des Flachstabs 4 sind herabgezogene Seitenflächen 5 vorgesehen. Die Unterseiten 6 der Seitenflächen 5 weisen am dem Stützfuss 2 gegenüberliegenden Ende 7 des Flachstabs 4 je einen nasenartigen Vorsprung 8 auf. Die konvexe Wölbung des Flachstabs 4 ist derart bemessen, dass die nasenartigen Vorsprünge 8 bei am Untergrund montiertem Kabelhaltebügel 1 mit einer gewissen Vorspannung gegen den Untergrund gepresst sind. Die vom Stützfuss 2 abgewandten Strinflächen 9 der nasenartigen Vorsprünge 8 schliessen im montierten Zustand mit dem Untergrund einen spitzen Winkel von beispielsweise etwa 30° ein.

An das Ende des Flachstabes 4 ist eine Grifflasche 10 angeformt, die an ihren beiden Längsseiten herabgezogene Flachseiten 11 aufweist, die mit den herabgezogenen Seitenflächen 5 des Flachstabs 4 fluchten. Die in der Gebrauchsstellung des Kabel haltebügels 1 zum Untergrund weisenden Flächen an den Flachseiten 11 sind als Gleitflächen 12 ausgebildet und gehen in die Stirnflächen 9 der nasenartigen Vorsprünge 8 über. Auf diese Weise sind an beiden Längsseiten des Kabelhaltebügels 1 vom freien Ende 13 der Grifflasche weg zu den nasenartigen Vorsprüngen 8 Einführschrägen für ein seitlich eingeschobenes Kabel gebildet. Am freien Ende 13 der Grifflasche 10 ragt von der Unterseite 14 eine Griffkante 15 ab, welche die seitlichen Gleitflächen 12 an den Flachseiten 11 verbindet. Die Griffkante 15 überragt die seitlichen Gleitflächen um etwa 0,5 mm bis etwa 1,5 mm. Die herabgezogenen Flachseiten 11 an den Längsseiten der Grifflasche 10 und die quer dazu verlaufende Griffkante 15 bilden zusammen eine Griffmulde, die das Anheben des Flachstabs 4 des Kabelhaltebügels 1 von Hand erleichtert. Der Abstand, den die Griffkante 15 des montierten Kabelhaltebügels 1 von der Unterlage aufweist, beträgt beispielsweise 11 mm oder mehr, damit die in der Haustechnik am häufigsten verwendeten Kabel mit einem Durchmesser von 10 mm ungehindert seitlich einschiebbar sind. Aber auch Kabel mit grösseren Durchmessern sind problemlos einführbar. Gegebenenfalls muss der Kabelhaltebügel 1 an der Grifflasche 10 ein wenig hochgezogen werden.

Zur Verhinderung eines seitlichen Ausknickens der Seitenflächen 5 des Flachstabs 4 beim händischen Anheben des Flachstabs 4 durch Ziehen oder Drücken an der Grifflasche 10 bzw. beim automatischen Hochdrücken des Flachstabs 4 durch ein seitlich eingeschobenes Kabel ist der Flachstab 4, wie in Fig. 1 und 2 angedeutet, mit Versteifungsrippen 19 ausgestattet, die an der in Gebrauchsstellung des Kabelhaltebügels 1 zum Untergrund weisenden Seite des Flachstabs 4 angeordnet sind und dessen herabgezogene Seitenflächen 5 verbinden. Die Versteifungsrippen 19 sind über die Längserstreckung des Flachstabs 4 verteilt und vorzugsweise im gleichen Abstand vorgesehen.

Fig. 3 zeigt einen erfindungsgemäss ausgebildeten Kabelhaltebügel 1, der am Untergrund G montiert ist, kurz bevor er automatisch von einem seitlich eingeschobenen Kabel C hochgedrückt wird. Die Griffmulde, die von der Griffkante 15 und den Flachseiten 11 der Grifflasche gebildet wird, ist deutlich erkennbar. Bei dem Kabel C handelt es sich, wie beispielsweise dargestellt, um ein mehrphasiges Kabel, wobei die einzelnen Phasen P von einem Kabelmantel M umgeben sind. Um beim seitlichen Einschieben des Kabels C eine Beschädigung des Kabelmantels M zu verhindern, sind die Aussenkanten 16, 17 der Gleitflächen 12 und der Stirnflächen 9 der nasenartigen Vorsprünge 8 abgerundet (Fig. 2). Das seitlich eingeschobene Kabel C stösst schliesslich gegen die Gleitflächen 12 an den Flachseiten 11 der Grifflasche 10 und drückt den Flachstab 4 gegen die Vorspannkraft hoch. Dabei werden die nasenartigen Vorsprünge 8 vom Untergrund G abgehoben. Beim weiteren seitlichen Einschieben des Kabels C gleitet diese den Gleitflächen 12 entlang bis zu den Stimflächen 9 an den nasenartigen Vorsprüngen 8. Dabei werden die nasenartigen Vorsprünge 8 immer höher gepresst. Die grösste Biegekraft ist erreicht, wenn die nasenartigen Vorsprünge 8 am Scheitel des Kabelmantels M anliegen. Sobald das Kabel C die nasenartigen Vorsprünge 8 passiert hat, federt der Flachstab 4 wieder gegen den Untergrund G zurück. Das Kabel C wird von der Zahnung 18 an den Unterseiten 6 der Seitenflächen 5 des Flachstabs 4 gehalten.

Der erfindungsgemässe Kabelhaltebügel ist vorzugsweise ein einteiliges Kunststoffspritzgussteil. Die vorteilhafte Gestaltung des Kabelhaltebügels vereinfacht dabei die Spritzgussform. Insbesondere sind Hinterschneidungen und dergleichen konstruktiv komplizierte Merkmale vermieden, was die Entformung des fertigen Kunststoffteils erleichtert. Dadurch ist der erfindungsgemässe Kabelhaltebügel mit einem oder mit zwei vom Stützfuss in einer Linie abragenden Flachstäben sehr einfach und kostengünstig herstellbar. Die Handhabung des erfindungsgemässen Kabelhaltebügels ist einfach. Die durch konstruktive Merkmale vorteilhaft realisierte Griffmulde erleichtert das händische Hochdrücken des Flachstabs, ohne das automatische Hochpressen durch ein seitlich eingeschobenes Kabel zu behindern.

## Patentansprüche

1. Kabelhaltebügel zur Halterung eines oder mehrerer parallel zueinander an einem Untergrund (G) verlaufender Kabel (C) mit einem über seine Längserstreckung konvex gewölbten, flexiblen Flachstab (4), der von einem mit einer Bohrung (3) versehenen Stützfuss (2) abragt und herabgezogene Seitenflächen (5) aufweist, deren Unterseiten (6) am dem Stützfuss (2) gegenüberliegenden Ende (7) des Flachstabs (4) mit nasenartigen Vorsprüngen (8) ausgestattet sind, die im montierten Zustand mit Vorspannung gegen den Untergrund (G) gepresst sind, wobei die vom Stützfuss (2) abgekehrten Stirnflächen (9) der nasenartigen Vorsprünge (8) mit dem Untergrund (G) einen spitzen Winkel einschliessen und mit der Unterseite einer Grifflasche (10) fluchten, die vom Ende (7) des Flachstabs (4) abragt, **dadurch gekennzeichnet,dass** die Grifflasche (10) an ihren beiden Längsseiten herabgezogene Flachseiten (11) aufweist, die mit den Seitenflächen (5) des Flachstabs (4) fluchten und Gleitflächen (12) aufweisen, die in die Stirnflächen (9) der nasenartigen Vorsprünge (8) übergehen, wobei an der Unterseite (14) des freien Endes (13) der Grifflasche (10) eine quer zur Längserstreckung verlaufende Griffkante (15) vorgesehen ist, welche die Gleitflächen (12) verbindet.

2. Vorrichtung nach Anspruch 1, **dadurch gekennzeichnet, dass** die Griffkante (15), dem Verlauf des freien Endes (13) der Grifflasche (10) folgend, konvex gekrümmt ausgebildet ist.

3. Vorrichtung nach Anspruch 1 oder 2, **dadurch gekennzeichnet, dass** die Griffkante (15) die an den herabgezogenen Flachseiten (11) gebildeten Gleitflächen (12) überragt.

4. Vorrichtung nach Anspruch 3, **dadurch gekennzeichnet, dass** der Überstand der Griffkante (15) gegenüber den Gleitflächen (12) etwa 0,5 mm bis etwa 1,5 mm beträgt.

5. Vorrichtung nach einem der vorangehenden Ansprüche, **dadurch gekennzeichnet, dass** die Stirnflächen (9) der nasenartigen Vorsprünge (8) und die Gleitflächen (12) abgerundete Aussenkanten (16, 17) aufweisen.

6. Vorrichtung nach einem der vorangehenden Ansprüche, **dadurch gekennzeichnet, dass** an der Unterseite des konvex gewölbten Flachstabs (4) Versteifungsrippen (19) angeordnet sind, die über die Längserstreckung des Flachstabs (4) verteilt sind und die herabgezogenen Seitenflächen (5) verbinden.

7. Vorrichtung nach einem der vorangehenden Ansprüche, **dadurch gekennzeichnet, dass** sich zu beiden Seiten des Stützfusses (2) zwei konvex gewölbte Flachstäbe (4) erstrecken, deren Längserstreckungen fluchten und die bezüglich der Achse der Bohrung (3) symmetrisch ausgebildet sind.

## Claims

1. Cable grip for holding one or more cables (C) extending parallel to each other on a base (G), comprising a flexible flat bar (4), which is over its longitudinal extent convex curved and which protrudes from a support foot (2) which is provided with a bore (3) and with downwardly extended lateral surfaces (5), the undersides (6) of which are at the end (7) of the flat bar (4) opposite the support foot (2) provided with noselike protrusions (8) which are in the assembled state pretensioned against the base (G), and the end surfaces (9) of the noselike protrusions (8) facing away from the support foot (2) include with base (G) an acute angle and are flush with the underside of a holding tab (10) which protrudes from the end (7) of the flat bar (4), **characterised in that** the holding tab (10) has at its two longitudinal sides downwardly extended flat sides (11) which are flush with the lateral surfaces (5) of the flat bar (4) and have slide surfaces (12) which merge in the end surfaces (9) of the noselike protrusions (8), and at the underside (14) of the free end (13) of the holding tab (10) is provided a holding edge (15) which extends transversely to the longitudinal extent and which connects the slide surfaces (12).

2. Device according to Claim 1, **characterised in that** the holding edge (15), following the path of the free end (13) of the holding tab (10), is designed so as to be convex curved.

3. Device according to Claim 1 or 2, **characterised in that** the holding edge (15) protrudes the slide surfaces (12) established on the downwardly extended flat sides (11).

4. Device according to Claim 3, **characterised in that** the overlap of the holding edge (15) relative to the slide surfaces (12) lies between approximately 0.5 mm and approximately 1.5 mm.

5. Device according to one of the above claims, **characterised in that** both the end surfaces (9) of the noselike protrusions (8) and the slide surfaces (12) have rounded off outside edges (16, 17).

6. Device according to one of the above claims, **characterised in that** on the underside of the convex curved flat bar (4) are arranged reinforcing webs (19) spaced over the longitudinal extent of the flat bar (4) which connect the downwardly extended lateral surfaces (5).

7. Device according to one of the above claims, **characterised in that** on both sides of the support foot (2) extend two convex curved flat bars (4) the longitudinal extents of which are flush relative to each other and which are designed to be symmetrical relative to the axis of the bore (3).

## Revendications

1. Étrier de retenue de câbles pour retenir un ou plusieurs câbles (C) s'étendant parallèlement les uns aux autres sur un support (G), comprenant une barrette plate souple (4) qui présente un bombé convexe sur son extension longitudinale, qui dépasse d'un pied d'appui (2) pourvu d'un trou (3) et qui comporte des surfaces latérales descendantes (5) dont le dessous (6) est muni, à l'extrémité (7) de la barrette plate (4) située à l'opposé du pied d'appui (2), de saillies en forme de talons (8) qui, en position montée, sont plaquées avec précontrainte contre le support (G), les faces frontales (9) des saillies en forme de talons (8) situées à l'opposé du pied d'appui (2) formant avec le support (G) un angle aigu et étant alignées avec le dessous d'une patte de prise (10) qui dépasse de l'extrémité (7) de la barrette plate (4), **caractérisé en ce que** la patte de prise (10) comporte des côtés plats (11) qui descendent au niveau de ses deux côtés longitudinaux, qui sont alignés avec les surfaces latérales (5) de la barrette plate (4) et qui comportent des surfaces de glissement (12), lesquelles se raccordent aux faces frontales (9) des saillies en forme de talons (8), et sous le dessous (14) de l'extrémité libre (13) de la patte de prise (10) il est prévu une arête de prise (15) qui s'étend transversalement à l'extension longitudinale et qui relie les surfaces de glissement (12).

2. Dispositif selon la revendication 1, **caractérisé en ce que** l'arête de prise (15) présente une courbure convexe suivant le tracé de l'extrémité libre (13) de la patte de prise (10).

3. Dispositif selon la revendication 1 ou 2, **caractérisé en ce que** l'arête de prise (15) déborde des surfaces de glissement (12) formées sur les côtés plats descendants (11).

4. Dispositif selon la revendication 3, **caractérisé en ce que** la dimension de débordement de l'arête de prise (15) par rapport aux surfaces de glissement (12) est d'environ 0,5 mm à environ 1,5 mm.

5. Dispositif selon une des revendications précédentes, **caractérisé en ce que** les faces frontales (9) des saillies en forme de talons (8) et les surfaces de glissement (12) présentent des arêtes extérieures arrondies (16, 17).

6. Dispositif selon une des revendications précédentes, **caractérisé en ce que** sur le dessous de la barrette plate à bombé convexe (4) sont disposées des nervures de raidissement (19) qui sont réparties sur l'extension longitudinale de la barrette plate (4) et qui relient les surfaces latérales descendantes (5).

7. Dispositif selon une des revendications précédentes, **caractérisé en ce que** des deux côtés du pied d'appui (2) s'étendent deux barrettes plates à bombé convexe (4) dont les extensions longitudinales sont alignées et qui sont symétriques par rapport à l'axe du trou (3).
